# DEMANDE DE BREVET EUROPEEN

(11) **EP 1 207 144 A2**
(43) Date de publication de la demande: **22.05.2002**
(21) Numéro de dépôt: 01402929.2
(22) Date de dépôt: 14.11.2001
(51) Int. Cl.: C04B 38/06, C04B 33/22

(54) **Céramiques multicouches allègées**

(30) Priorité: 14.11.2000 FR 0014618
(71) Demandeur: Mantion, Serge, 76150 Maromme (FR)
(72) Inventeur: Mantion, Serge, 76150 Maromme (FR)
(74) Mandataire: Viard, Jean

(57) **Abrégé**

L'invention concerne une céramique préparée par cuisson, comprenant au moins deux couches (A, B, C, D) constituées chacune essentiellement d'un mélange d'argiles et/ou de grès et/ou de granulats de composition prédéterminée.

Selon l'invention, les compositions respectives des mélanges d'argiles et/ou de grès et/ou de granulats desdites au moins deux couches (A, B, C, D) sont différentes, et au moins l'une des dites couches contient un élément aérateur qui disparaît lors de la cuisson.

Applications : pièces céramiques de basse densité; matériaux de construction destinés à la décoration, la climatisation et la filtration.

## Description

La présente invention a pour objet de nouveaux matériaux multicouches à bases de terres cuites composées d'un mélange d'argiles et de grès et des procédés de fabrication de ces matériaux.

Plus précisément, l'invention concerne dans un premier aspect une céramique préparée par cuisson, comprenant au moins deux couches constituées chacune essentiellement d'un mélange d'argiles et/ou de grès et/ou de granulats de composition prédéterminée.

Les céramiques multicouches de ce type connues de l'art antérieur associent des couches faites de mélanges de terres de compositions semblables. Ces couches ont de ce fait le même comportement, en particulier pendant les phases de séchage, de cuisson et de refroidissement. Des couches de compositions différentes ont des comportements différents pendant les diverses étapes de rétraction, séchage et cuisson.

Pendant le séchage et la cuisson, ces couches subissent généralement des rétractions différentes. Si la couche interne subit une rétraction plus forte que la couche externe de la céramique, il y a risque de décollement de l'une ou des deux couches. Si la couche interne subit une rétraction plus faible que la couche externe, il y a risque de fissuration ou d'éclatement des couches.

Aussi, jusqu'à présent, l'association de couches faites de mélanges de compositions différentes étaient réputée impossible par l'homme du métier.

La présente invention vise à résoudre cette difficulté.

A cette fin, la céramique multicouche allégée selon l'invention, par ailleurs conforme à la définition générique qu'en donne le préambule ci-dessus, est essentiellement caractérisée en ce que les compositions respectives des mélanges d'argiles et/ou de grès et/ou de granulats des dites au moins deux couches sont différentes et en ce que au moins une des couches comprend également un élément aérateur qui disparaît lors de la cuisson.

L'incorporation d'un élément aérateur dans l'une des deux couches confère à celle-ci une structure comprenant des espaces libres internes après cuisson. Cette structure est beaucoup plus souple qu'une structure pleine. Les contraintes mécaniques sur cette structure sont amorties par déformation des parties pleines internes de la couche dans les espaces laissés libres après cuisson ou occupés par le grain suffisamment souple de l'élément aérateur avant cuisson.

Ces caractéristiques permettent d'associer deux matériaux possédant des propriétés thermiques ou mécaniques différentes, du fait que la couche de matériau allégé peut accompagner l'autre couche en se déformant.

Dans un mode de réalisation possible de la céramique selon l'invention, au moins deux couches comprennent le dit élément aérateur disparaissant pendant la cuisson.

Dans un mode de réalisation possible de la céramique selon l'invention, au moins une couche peut comprendre une quantité d'élément aérateur comprise avant cuisson entre 50% et 80% du volume total de la couche.

Dans un mode de réalisation possible de la céramique selon l'invention, l'agent aérateur est constitué par de la sciure de bois, des billes de polystyrène ou tout matériau brûlant ou se sublimant à une température inférieure à la température de cuisson de la céramique.

Dans un mode de réalisation possible de la céramique selon l'invention, des granulats sont incorporés dans au moins une des dites couches, avant cuisson, au mélange argiles/grès/élément aérateur.

Dans un mode de réalisation possible de la céramique selon l'invention, les granulats sont constitués par de la vermiculite, de la pouzzolane, de la pierre ponce, du basalte, des billes ou granulats de terre cuite allégée ou non ou de verre ou plus généralement de scories et matériaux résistant à la température de cuisson.

Dans un mode de réalisation possible de la céramique selon l'invention, des granulats sont inclus dans une couche intermédiaire entre deux couches sans granulats.

L'invention concerne dans un deuxième aspect des procédés de fabrication de céramiques présentant les caractéristiques décrites ci-dessus.

Le procédé selon l'invention est essentiellement caractérisé en ce qu'il consiste à:
- déshydrater des argiles et/ou grès réduits en poudre
- ajouter un agent aérateur et/ou des granulats pour former un premier mélange de première composition prédéterminée.
- préparer une première préparation en mélangeant l'ensemble avec de l'eau dans une proportion préderminée pour chaque constituant et, éventuellement, avec des adjuvants.
- recommencer les étapes précédentes pour préparer au moins une seconde préparation à partir d'un mélange d'argiles et/ou de grès et/ou de granulats de seconde composition prédéterminée différente de la première, l'ajout d'agent aérateur étant facultatif.
- déposer une première couche de la première préparation au fond d'un moule, par exemple en plâtre, qui absorbe l'eau.
- déposer une ou plusieurs autres couches successivement sur la première couche, au moins une de ces couches étant constituée avec la seconde préparation.
- recouvrir par un film plastique non adhérent.
- poser une plaque sur le film et presser afin d'homogénéiser le mélange.
- retirer la plaque et le film.
- lisser la surface supérieure.
- attendre le retrait dans le moule en plâtre pendant un temps de 1 à 4 heures en moyenne.
- démouler par retournement sur une toile plastique finement perforée, elle-même posée sur une grille métallique, ce qui conduit à la déshydratation nominale.
- lisser manuellement les surfaces si besoin.
- sécher; étuver.
- cuire, refroidir.

Selon un autre mode de réalisation du procédé selon l'invention, celui-ci est essentiellement caractérisé en ce qu'il consiste à:
- déshydrater des argiles et/ou grès réduits en poudre
- ajouter un agent aérateur et/ou des granulats pour former un premier mélange de première composition prédéterminée.
- préparer une première préparation en mélangeant l'ensemble avec de l'eau dans une proportion préderminée pour chaque constituant et, éventuellement, avec des adjuvants.
- recommencer les étapes précédentes pour préparer au moins une seconde préparation à partir d'un mélange d'argiles et/ou de grès et/ou de granulats de seconde composition prédéterminée différente de la première, l'ajout d'agent aérateur étant facultatif.
- déposer une première couche de la première préparation au fond d'un moule, par exemple en plâtre, qui absorbe l'eau.
- déposer une ou plusieurs autres couches successivement sur la première couche, au moins une de ces couches étant constituée avec la seconde préparation.
- recouvrir par un film plastique non adhérent.
- poser une plaque sur le film et presser afin d'homogénéiser le mélange.
- retirer la plaque et le film.
- lisser la surface supérieure.
- attendre le retrait dans le moule en plâtre pendant un temps de 1 à 4 heures en moyenne.
- démouler par retournement sur une toile plastique finement perforée, elle-même posée sur une grille métallique, ce qui conduit à la déshydratation nominale.
- lisser manuellement les surfaces si besoin.
- sécher; étuver.
- cuire, refroidir.

Selon autre mode de réalisation du procédé selon l'invention, celui-ci est essentiellement caractérisé en ce qu'il consiste à:
- appliquer les couches par filage successivement;
- puis à les comprimer et régulariser leur épaisseur avant cuisson.

Selon autre mode de réalisation du procédé selon l'invention, celui-ci est essentiellement caractérisé en ce qu'il consiste à:
- projeter le mélange à cuire à l'intérieur d'un cylindre tournant;
- régulariser l'épaisseur de la couche déposée par une raclette ;
- projeter au moins une autre couche avant cuisson.

D'autres caractéristiques et avantages de l'invention apparaîtront au cours de la description qui va suivre de modes de réalisation, donnés uniquement à titre d'exemples non limitatifs, en regard des dessins annexés qui représentent:
- les figures 1a et 1b, différents exemples de céramiques selon l'invention;
- la figure 2 une autre céramique selon l'invention;
- la figure 3, une vue d'un radiateur en céramique;
- la figure 4, une vue schématique d'un filtre comprenant une céramique selon l'invention;
- la figure 5, le schéma d'une installation de nappage;
- la figure 6, le schéma d'une installation de projection permettant de fabriquer des objets cylindrique en céramique;
- la figure 7, une vue d'un fragment d'un cylindre obtenu par le procédé schématisé sur la figure 6 ; et
- la figure 8, une vue en coupe d'un autre radiateur en céramique selon l'invention.

L'invention concerne des céramiques préparées à base d'argiles et de grès, utilisés généralement pour des produits de grandes séries à prix modérés. Ces céramiques ne contiennent les produits de base utilisés traditionnellement pour la porcelaine, comme le kaolin par exemple, qu'en faible quantité, moins de 10 %.

Selon l'invention, la céramique est constituée d'au moins deux couches superposées préparées à partir de mélanges d'argiles et/ou de grès et/ou de granulats de compositions différentes. On peut ainsi associer des couches présentant des caractéristiques différentes de solidité, porosité, légèreté, conduction/isolement thermique ou phonique, aspect extérieur, de façon à bénéficier des propriétés intrinsèques diverses couches.

L'une au moins de ces couches comprend également un élément aérateur qui disparaît lors de la cuisson. Cette couche allégée est ainsi plus souple et peut se déformer au contact de l'autre couche plus rigide, comme expliqué ci-dessus.

Chaque couche doit présenter une épaisseur minimum de plusieurs millimètres pour que la céramique puisse bénéficier de la combinaison des caractéristiques techniques offertes par la composition de chaque couche.

Cette céramique se différencie ainsi des céramiques revêtues d'engobes, de couvertes ou de glaçures, ajoutées en fines couches à la surface des pièces pour des raisons esthétiques ou pour augmenter la résistance aux agressions extérieures.

Les propriétés des différentes couches peuvent également être modifiées en jouant sur la quantité d'élément aérateur et en ajoutant des granulats dans au moins une des couches allégées.

Ainsi :
- la résistance mécanique diminue plus le taux d'allègement augmente;
- la conduction (thermique et phonique) diminue plus le taux d'allègement augmente;
- le pouvoir isolant (thermique et phonique) augmente plus le taux d'allègement augmente;
- le taux d'absorption (liquide) augmente plus le taux d'allègement augmente;
- la porosité augmente plus le taux d'allègement augmente

Un fort taux d'allègement et une granulométrie importante de l'élément aérateur donnent une céramique très poreuse.

En fonction de l'aspect extérieur recherché, on peut par exemple utiliser des grains de verre ou de pouzzolane, qui se vitrifient en surface, de la vermiculite, qui donne un aspect moucheté, ou un taux d'allègement faible combiné à une granulométrie fine de l'élément aérateur, pour donner une surface lisse.

Le choix de la composition du mélange d'argile et de grès à utiliser pour une couche est fait par l'homme du métier de façon à ce que celle-ci soit compatible avec le taux d'allègement de la couche, avec la nature et la quantité de granulats utilisés, et avec la composition des autres couches.

D'autres critères guideront également ce choix. Si une résistance aux agressions thermiques est nécessaire, en particulier à la flamme, le choix d'une composition réfractaire est nécessaire (terre à feu, grès). Si une résistance aux agressions chimiques est nécessaire, certains composants peuvent être recommandés ou interdits suivant les cas.

L'incorporation de granulats diminue le taux de rétraction des céramiques pendant le séchage et la cuisson : à 50% en volume de granulats le taux de rétraction est de 1,5 dans le cas d'une céramique allégée à 50%.

Le choix de matériaux des granulats conditionne également certains paramètres. Il est préférable, pour isoler thermiquement et phoniquement, d'utiliser de la vermiculite, des billes d'argile expansée, des morceaux de céramique allégée ou de la pouzzolane, dans une moindre mesure.

A contrario, il est préférable, pour une meilleure conduction thermique et phonique, d'utiliser des grains de verre, du basalte, des morceaux de céramique non allégée ou des matériaux denses.

On choisit de préférence une base d'argile ou de grès d'origine naturelle, de bonne qualité, d'application industrielle (utilisés dans la fabrication de briques, carrelages,...).

Cette base sert d'apport principal à la composition. On peut associer les terres (base d'argile ou de grès) entre elles pour obtenir des mélanges de caractéristiques et de couleurs intermédiaires dans des proportions variant au cas par cas.

La composition de cette base d'argile ou de grès est choisie pour ses caractéristiques en fonction de l'application envisagée. Elle est préparée à partir de diverses bases standard disponibles sur le marché mélangées entre elles.

On rajoute en général à cette base des additifs. Un exemple est donné ci-dessous. Il n'est nullement limitatif.

| Composition | % du volume final | Foncion |
|---|---|---|
| Argile ou grès | 70% | Elément principal de la composition |
| Bail clays | =10 à 15%,exemple:Nançay | Cohésion, plasticité |
| Fondant et Structurant | 8,5% de Feldspath = 10% 1,5% de talc | Maturation Sert au rapprochemment Des terres |
| Chamotte | = 5 à 10% en complément | Dégraissant Déshydradation homogène (séchage) Meilleure maîtrise du Coefficient de réfraction |
| Total | 100% du volume | |
| Verre broyé | +5% (<à200µ) à +10% pour une vitrification | Renforce la résistance Mécanique |

A ce mélange, on ajoute un élément aérateur qui, lorsqu'il brûle, disparaît pour laisser son empreinte dans la matière et ceci dans une proportion pouvant atteindre 80% du mélange global.

La granulométrie de l'élément aérateur est en général de (355/250µ) pour une bonne finesse de la structure, voir (530/250µ) pour une texture plus grossière.

Une granulométrie trop fine (<250µ et farine) ne permet pas une bonne maîtrise dimensionnelle après cuisson.

Une granulométrie très grosse (copeaux, sciure grossière, paillis de lin) sera utilisée en général dans le cas de forts taux d'allégement. Elle permet également d'obtenir des effets de structure (aspect). température de cuisson de la céramique. Cette température est de 1150°C en moyenne et se situe dans une fourchette de 1000°C à 1300°C.

A cette préparation,on peut incorporer des granulats dans une proportion qui se limite à 50% du volume total (argiles/grès/élément aérateur/additifs/granulats).

Au-delà de 50% d'allègement et 50% de granulats (c'est-à-dire 25% argiles/grès/additifs, 25% élément aérateur, 50% granulats), la cohésion est insuffisante pour des applications industrielles.

Divers types de granulats sont possibles : verre, morceaux de céramique, pouzzolane, basalte, vermiculite (mica expansé), billes d'argile expansée... Il est à noter que la vermiculite (micra expansé) peut jouer à elle seule la fonction de l'élément aérateur et des granulats. La souplesse des grains expansés leur permet de remplir de cette double fonction. Ils ne disparaîssent pas lors de la cuisson.

On va maintenant décrire des exemples d'associations de couches rendues possibles par l'invention.

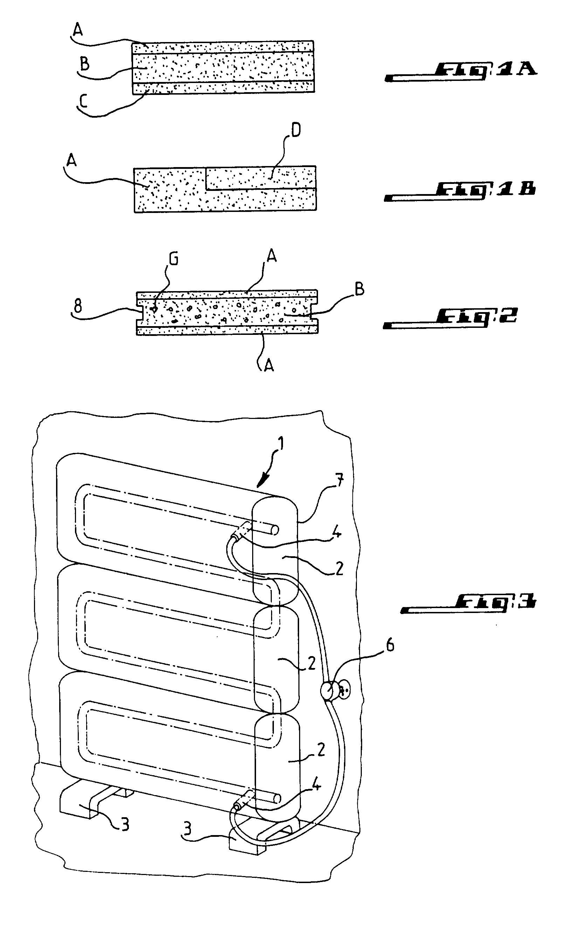

La figure 1 représente deux exemples simples de fragments de céramique obtenue selon l'invention.

Sur la figure 1a, la céramique comprend trois couches. C'est-à-dire qu'en coupe verticale on distingue une couche supérieure A dont la densité est égale à 1, au-dessous de celle-ci, une couche B dont la densité est égale, par exemple, à 0,5 et au-dessous de celle-ci une couche C dont la densité est de 1,8 ce qui correspond à un taux d'allègement de 20%, la densité naturelle des argiles étant de 2,2 à 2,4.

Cette céramique est très légère et présente néanmoins des faces relativement denses, en particulier la face inférieure, donc relativement résistantes d'un point de vue mécanique.

Sur la figure 1b, on distingue une couche A constituée par un premier mélange de terres dont une partie de la surface supérieure est recouverte d'une couche D d'un mélange de terres différent de celui de la couche A. La couche D peut être réfractaire alors que la couche A peut ne pas l'être.

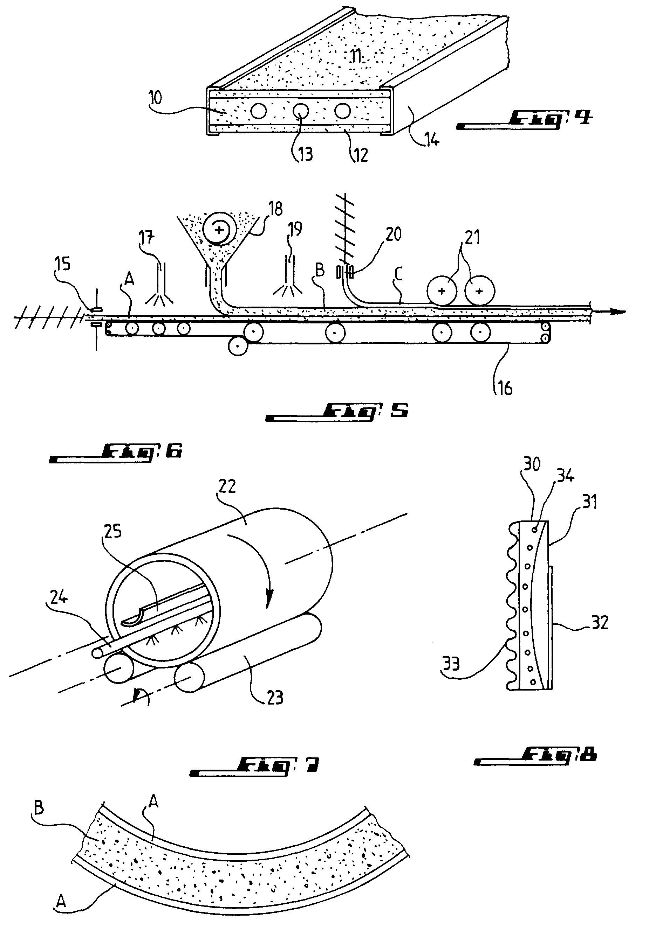

La figure 2 représente un échantillon de céramique comprenant, entre deux couches A, par exemple allégées à 50%, une couche plus épaisse B, également allégée à 50%, mais incluant des granulats G, par. exemple en pouzzolane, un tel carreau de terre cuite pouvant avantageusement être obtenu par un procédé de nappage qui sera décrit ultérieurement. Des mortaises d'assemblage 8 peuvent être formées dans la partie médiane de leur épaisseur, mécaniquement, par exemple par fraisage.

Sur la figure 3, le corps 1 d'un radiateur, en céramique telle que celle qui vient d'être décrite en référence à la figure 2, est sensiblement parallélépipédique et constitué, dans l'exemple représenté, de trois éléments superposés 2 qui peuvent être assemblés par des moyens de fixation mécanique tels que des vis ou goujons. La face avant peut être émaillée. Le corps du radiateur est en céramique et repose au sol de préférence par un pied 3 qui évite la transmission de la chaleur à celui-ci. Des trous longitudinaux 4 pratiqués de la couche centrale B viennent soit de moulage, soit de perçage après démoulage. À l'intérieur de ces trous est passée une résistance 5 s'étendant, de gauche à droite, sur toute la hauteur des éléments 2 selon un pas déterminé. Cette résistance est reliée à une source de courant 6. La céramique étant électriquement isolante, la résistance 5 nue peut être directement passée dans les trous 4. La partie poreuse arrière 7 du radiateur assure le passage de l'air chauffé au contact des résistances. Ce type de radiateur peut combiner deux énergies et contenir éventuellement un liquide caloporteur.

La figure 4 représente un élément filtrant constitué d'une céramique selon l'invention, en forme de galette ou de parallélépipède, comprenant un noyau 10 de densité, par exemple égale à 0,5 entouré par deux surfaces 11 et 12 dont la densité est supérieure et, par exemple, égale à 1. Il s'agit d'un élément destiné à une filtration fine. Le corps de l'élément est percé de trous longitudinaux 13 destinés à recueillir le filtrat et à l'évacuer. Un film d'étanchéité 14 est appliqué contre les côtés latéraux de l'élément filtrant pour éviter des fuites latérales.

La figure 8 est un autre exemple de radiateur comprenant une céramique selon l'invention. Ce radiateur électrique comprend une couche interne 30 de répartition thermique dont l'épaisseur augmente sur les bords pour uniformiser la température de surface. La densité de cette couche doit être forte pour mieux véhiculer la chaleur, ce qui peut être obtenu en incorporant des granulats à cette couche. Ce radiateur comprend également une couche 31 de surface apparente plus isolante que la couche interne 30, de façon à maintenir la température de contact à 70°C maximum, conformément à une norme règlementaire dite chaleur douce.

Une couche décorative 32 d'aspect plus foncé couvre partiellement la couche 31 et présente des rainures verticales.

Enfin, un diffuseur métallisé 33 est plaqué sur une face arrière de la couche 30 pour diffuser par convection une partie de la chaleur.

Des trous 34 pratiqués dans la couche interne 30 permettent de loger des éléments chauffants.

Les couches 30, 31 et 32 constituent une céramique selon l'invention.

Divers procédés de fabrication d'objets en céramiques multicouches peuvent être mis en oeuvre et, par exemple, le moulage simple, le moulage sous pression, l'estampage, le nappage et la projection. Certains, comme le moulage sous pression et l'estampage sont classiques et ne seront pas décrits. Les autres sont propres à la nature du matériau à mouler et aux résultats que l'on désire obtenir.

Le procédé de fabrication par moulage est le suivant.

Des argiles et/ou des grès sont déshydratés et réduits en poudre. Cette poudre est mélangée dans une proportion prédéterminée avec un élément aérateur, tel que de la sciure de bois, et/ou des granulats. L'ensemble est mélangé avec de l'eau dans une proportion variant en fonction de l'application et, éventuellement, avec un ou des additifs pour former une première préparation.

Une proportion fréquemment utilisée est de 1/3 en volume pour l'eau, 1/3 en volume pour l'élément aérateur et 1/3 en volume pour le mélange argile/grès/granulats.

Au moins une deuxième préparation, de composition différente, est préparée de la même façon, l'ajout d'élément aérateur étant facultatif.

Dans un mode de réalisation, une première couche de la première préparation est déposée au fond d'un moule, par exemple en plâtre, qui absorbe l'eau. Puis une autre couche, éventuellement plusieurs, est déposée sur la première couche. Cette nouvelle couche, ou au moins une de ces couches, est constituée avec la deuxième préparation.

Dans un autre mode de réalisation, les première et deuxième préparations sont mélangées grossièrement et introduites dans le moule. Si on choisit par exemple des mélanges d'argiles et/ou de grès donnant des couleurs différentes pour les deux préparations, on obtiendra alors après cuisson des effets de marbrure.

Un film plastique non adhérent est alors déposée sur le mélange ou sur la surface de la couche supérieure. Une plaque est posée sur le film et soumise à une pression afin d'homogénéiser le mélange. Le démoulage s'effectue en plusieurs temps:
- Retrait de la plaque et du film;
- Lissage de la surface supérieure;
- Attente du retrait dans le moule en plâtre pendant un temps de 1 à 4 heures en moyenne, 12 heures pour les pièces les plus volumineuses;
- Démoulage par retournement (éventuellement à l'aide d'un jet d'air) sur une toile plastique finement perforée, elle-même posée sur une grille métallique, ce qui conduit à la déshydratation nominale;
- Lissage manuel des surfaces si nécessaire.
- Séchage, étuvage.

Après un cycle de cuisson à 1150°C, environ, l'objet démoulé est prêt à l'emploi. Cet objet en céramique peut être revêtu d'une couverte en fonction de l'usage projeté.

Un autre procédé de fabrication est représenté sur la figure 5. Il s'agit d'un procédé par nappage.

Une première couche A, avec un allègement de 30%, par exemple, est obtenue par filage dans une filière 15 et se déplace sur un tapis 16 entraîné de la gauche vers la droite par des rouleaux (non référencés) . La surface supérieure de cette première couche A reçoit par un ajutage 17 une pulvérisation d'eau et d'additifs. Une seconde couche B, couche de masse allégée à 50% mais incluant des granulats, est appliquée sur la couche A par une trémie 18 et après pose sur le tapis cette seconde couche reçoit sur sa surface supérieure un mélange d'eau et d'additifs pulvérisé par l'ajutage 19. Une troisième couche C est ensuite appliquée par filage, sur la surface supérieure de la couche de masse B, par une filière 20. Cette couche C est, par exemple une couche allégées à 50%. L'ensemble est ensuite comprimé et calibré par des rouleaux 21 pour donner à la bande multicouches une épaisseur déterminée et assurer l'adhésion des couches entre elles.

Les pièces désirées sont obtenues par découpage avant cuisson. Après quoi il est possible de procéder à des pulvérisations sur les tranches.

Il est aussi possible de fabriquer des tubes ou tuyaux en céramiques réfractaires sandwichées par un procédé de projection tel que celui qui est schématisé sur la figure 6. Un cylindre en plâtre 22 tourne sur des rouleaux 23 avec une vitesse contrôlée. Un ensemble de buses de projection du mélange à cuire sont réparties sur un tube 24 permettant une répartition sensiblement régulière de la matière. Une raclette 25 asservie par un automatisme contrôle l'épaisseur et la répartition de la matière projetée et assure l'homogénéité de la couche. Plusieurs projections successives de matériaux différents sont ainsi possibles et permettent d'obtenir des tubes dont un fragment est représenté en coupe sur la figure 7. Il comprend deux couches A intérieure et extérieure allégées à 50% pour leur conférer une résistance mécanique suffisante. La couche intermédiaire B est, par exemple allégée à 75% ce qui permet d'obtenir des tuyaux de faibles poids.

Les céramiques de l'invention offrent un vaste champ d'applications pour la constitution de matériaux de construction, pour des murs intérieurs ou extérieurs thermiquement et phoniquement isolants, façades décorées, cloisons, décors muraux de grandes dimensions, radiateurs, dispositifs de filtration, portes de pièces d'habitation ou de meubles, objets de décoration, objets parfumés, etc.

Les pièces obtenues peuvent être façonnées par estampage, moulage sous pression ou non, nappage ou projection et peuvent être émaillées, plastifiées ou métallisées. Un matériau préparé à partir de composants courants offre une résistance au feu jusqu'à 500°C sans modifications notables de ses caractéristiques physiques.

De sensibles améliorations peuvent être obtenues en utilisant des composants réfractaires.

Par ailleurs, le matériau obtenu après cuisson peut facilement s'usiner. La couleur varie naturellement du crème au brun rouge en fonction des terres utilisées.

Enfin, en fonction du taux d'allègement utilisé, la céramique présente une densité pouvant descendre jusqu'à 0,5, ce qui augmente encore le champ d'application possible.

## Revendications

1. Céramique préparée par cuisson, comprenant au moins deux couches (A, B, C, D) constituées chacune essentiellement d'un mélange d'argiles et/ou de grès et/ou de granulats de composition prédéterminée, **caractérisée en ce que** les compositions respectives des mélanges d'argiles et/ou de grès et/ou de granulats desdites au moins deux couches (A, B, C, D) sont différentes, et **en ce que** au moins l'une des dites couches contient un élément aérateur qui disparaît lors de la cuisson.

2. Céramique selon la revendication 1, **caractérisée en ce qu'**au moins deux couches (A, B, C, D) comprennent ledit élément aérateur disparaissant pendant la cuisson.

3. Céramique selon la revendication 1 ou 2, **caractérisée en ce qu'**au moins une couche comprend une quantité d'élément aérateur comprise, avant cuisson, entre 50 et 80% du volume total de la couche.

4. Céramique selon l'une quelconque des revendications 1 à 3, **caractérisée en ce que** l'agent aérateur est constitué par de la sciure de bois, des billes de polystyrène ou tout matériau brûlant ou sublimant à une température inférieure à la température de cuisson de la céramique.

5. Céramique selon l'une quelconque des revendications 1 à 4, **caractérisée en ce que** des granulats sont incorporés dans au moins une des dites couches (A, B, C, D), avant cuisson, au mélange argiles/grès/élément aérateur.

6. Céramique selon la revendication 5, **caractérisée en ce que** les granulats sont constitués par de la vermiculite, de la pouzzolane, de la pierre ponce, du basalte, des billes ou granulats de terre cuite allégée ou non ou de verre ou plus généralement de scories et matériaux résistant à la température de cuisson.

7. Céramique selon la revendication 5 ou 6, **caractérisée en ce que** des granulats sont inclus dans une couche (B) intermédiaire entre deux couches sans granulats (A,C).

8. Procédé de fabrication d'une céramique selon l'une quelconque des revendications précédentes, **caractérisé en ce qu'**il consiste à:
- déshydrater des argiles et/ou grès réduits en poudre.
- ajouter un agent aérateur et/ou des granulats pour former un premier mélange de première composition prédéterminée.
- préparer une première préparation en mélangeant l'ensemble avec de l'eau dans une proportion prédéterminée pour chaque constituant et, éventuellement, avec des additifs.
- recommencer les étapes précédentes pour préparer au moins une seconde préparation à partir d'un mélange d'argiles et/ou de grès et/ou de granulats de seconde composition prédéterminée différente de la première, l'ajout d'agent aérateur étant facultatif.
- déposer une première couche de la première préparation au fond d'un moule, par exemple en plâtre, qui absorbe l'eau.
- déposer une ou plusieurs autres couches successivement sur la première couche, au moins une de ces couches étant constituée avec la seconde préparation.
- recouvrir par un film plastique non adhérent.
- poser une plaque sur le film et presser afin d'homogénéiser le mélange.
- retirer la plaque et le film.
- lisser la surface supérieure.
- attendre le retrait dans le moule en plâtre pendant un temps de 1 à 4 heures.
- démouler par retournement sur une toile plastique finement perforée, elle-même posée sur une grille métallique, ce qui conduit à la déshydratation nominale.
- lisser manuellement les surfaces si besoin.
- sécher; étuver.
- cuire, refroidir.

9. Procédé de fabrication d'une céramique selon l'une quelconque des revendications 1 à 7 **caractérisé en ce qu'**il consiste à:
- appliquer par filage successivement les couches (A, B, C) ;
- puis à les comprimer et régulariser leur épaisseur avant cuisson.

10. Procédé de fabrication d'une céramique selon l'une des revendications 1 à 7, **caractérisé en ce qu'**il consiste à:
- projeter le mélange à cuire à l'intérieur d'un cylindre (22) tournant;
- régulariser l'épaisseur de la couche déposée par une raclette (25);
- projeter au moins une autre couche avant cuisson.

11. Procédé de fabrication d'une céramique selon l'une quelconque des revendications 1 à 7, **caractérisé en ce qu'**il consiste à :
- déshydrater des argiles et/ou grès réduits en poudre.
- ajouter un agent aérateur et/ou des granulats pour former un premier mélange de première composition prédéterminée.
- préparer une première préparation en mélangeant l'ensemble avec de l'eau dans une proportion prédéterminée pour chaque constituant et, éventuellement, avec des additifs.
- recommencer les étapes précédentes pour préparer au moins une seconde préparation à partir d'un mélange d'argiles et/ou de grès et/ou de granulats de seconde composition prédéterminée différente de la première, l'ajout d'agent aérateur étant facultatif.
- mélanger grossièrement au moins les première et seconde préparations.
- introduire l'ensemble dans un moule, par exemple en plâtre, qui absorbe l'eau.
- recouvrir par un film plastique non adhérent.
- poser une plaque sur le film et presser afin d'homogénéiser le mélange.
- retirer la plaque et le film.
- lisser la surface supérieure.
- attendre le retrait dans le moule en plâtre pendant un temps de 1 à 4 heures.
- démouler par retournement sur une toile plastique finement perforée, elle-même posée sur une grille métallique, ce qui conduit à la déshydratation nominale.
- lisser manuellement les surfaces si besoin.
- sécher; étuver.
- cuire, refroidir.
